(19) Europäisches Patentamt
European Patent Office
Office européen des brevets

(11) EP 1 750 920 B1

(12) FASCICULE DE BREVET EUROPEEN

(45) Date de publication et mention de la délivrance du brevet:
**22.08.2012 Bulletin 2012/34**

(21) Numéro de dépôt: **05776378.1**

(22) Date de dépôt: **01.06.2005**

(51) Int Cl.:
***B29C 41/06*** *(2006.01)* ***F17C 1/06*** *(2006.01)*
***B29C 41/04*** *(2006.01)*

(86) Numéro de dépôt international:
**PCT/FR2005/050403**

(87) Numéro de publication internationale:
**WO 2005/123359 (29.12.2005 Gazette 2005/52)**

(54) **PROCEDE DE FABRICATION D"UNE VESSIE D"ETANCHEITE D"UN RESERVOIR DE TYPE IV ET RESERVOIR DE TYPE IV**

VERFAHREN ZUR HERSTELLUNG EINER BLASE ZUM VERSCHLIESSEN EINES TYP-IV-BEHÄLTERS UND ENTSPRECHENDER TYP-IV-BEHÄLTER

METHOD FOR PRODUCING A BLADDER FOR SEALING A TYPE IV RESERVOIR, AND CORRESPONDING TYPE IV RESERVOIR

(84) Etats contractants désignés:
**AT BE BG CH CY CZ DE DK EE ES FI FR GB GR HU IE IS IT LI LT LU MC NL PL PT RO SE SI SK TR**

(30) Priorité: **03.06.2004 FR 0451104**

(43) Date de publication de la demande:
**14.02.2007 Bulletin 2007/07**

(73) Titulaires:
- **Commissariat à l'Énergie Atomique et aux Énergies Alternatives 75015 Paris (FR)**
- **L'AIR LIQUIDE, Société Anonyme pour l'Etude et l'Exploitation des Procédés Georges Claude 75007 Paris (FR)**

(72) Inventeurs:
- **MAZABRAUD, Philippe F-45000 ORLEANS (FR)**
- **DOULIN, Gwénaël F-44240 LA CHAPELLE SUR ERDRE (FR)**
- **BARRAL, Katia F-78150 LE CHESNAY (FR)**

(74) Mandataire: **Poulin, Gérard et al**
**BREVALEX**
**95, rue d'Amsterdam**
**75378 Paris Cedex 8 (FR)**

(56) Documents cités:

| | |
|---|---|
| **WO-A-00/38897** | **FR-A- 1 519 947** |
| **FR-A- 2 120 161** | **FR-A- 2 125 347** |
| **FR-A- 2 813 235** | **GB-A- 1 044 205** |
| **US-A- 3 275 733** | **US-A- 3 417 097** |
| **US-A- 4 705 468** | **US-A- 4 927 038** |
| **US-A- 5 499 739** | **US-B1- 6 298 553** |

- **PATENT ABSTRACTS OF JAPAN vol. 1995, no. 10, 30 novembre 1995 (1995-11-30) & JP 07 167392 A (NIPPON EKOSU KK), 4 juillet 1995 (1995-07-04)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

La présente invention se rapporte à un procédé de fabrication d'un réservoir composite de type IV, et à un réservoir de type IV susceptible d'être obtenu par ce procédé.

Le domaine visé est le stockage de gaz sous pression (pression supérieure à la pression atmosphérique) avec un intérêt particulier pour le gaz naturel et surtout pour l'hydrogène.

Les réservoirs composites de type IV sont des réservoirs dans lesquels la pression des gaz stockés est généralement de $10^6$ à $10^8$ Pa. Leur structure doit donc être prévue d'une part pour être étanche aux gaz stockés et d'autre part pour supporter les pressions de stockage de ces gaz. C'est pourquoi ces réservoirs comprennent une vessie interne d'étanchéité au gaz, appelée aussi « liner » (terme anglais) interne, et une structure de renfort externe habituellement constituée de fibres carbones et de résine thermodurcissable.

La vessie d'étanchéité est une structure de révolution, généralement sans soudure et homogène, présentant des propriétés améliorées de perméabilité au gaz et de tenue mécanique. Elle est obtenue par rotomoulage. La structure de renfort externe peut être obtenue par exemple par enroulement filamentaire.

L'application majeure visée par la présente invention est la pile à combustible basse température (PEMFC).

Dans la description ci-dessous, les références entre crochets ([ ]) renvoient à la liste des références présentée après les exemples.

### Art antérieur

Les réservoirs de type IV ont été développés dans les années 1990, d'abord pour le stockage du gaz naturel avec des vessies en polyéthylène, et, plus récemment, à partir de 1997 essentiellement, pour le stockage de l'hydrogène.

Les vessies thermoplastiques actuellement utilisées sont en grande majorité constituées de polyéthylènes (PE) qui sont le plus souvent de haute densité (HDPE) et parfois réticulés (XHDPE). D'autres thermoplastiques de type polyamide (PA) (le plus souvent appelé « Nylon » (marque de commerce)) de type PA6, PA12 ou 11 sont également utilisés car ils présentent des propriétés barrières aux gaz intrinsèques meilleures que le polyéthylène. Enfin, d'autres types de thermoplastiques plus techniques peuvent être utilisés parce qu'ils présentent de bonnes propriétés barrières aux gaz, tels que le difluorure de polyvinylidène (PVDF) ou des solutions multicouches avec une couche barrière en copolymère éthylène-alcool vinylique (EVOH). Les documents [1] et [2] décrivent de tels thermoplastiques.

La plupart du temps, ces vessies sont obtenus par rotomoulage ou extrusion et/ou soufflage du matériau thermoplastique en fusion. Ainsi, dans le document **[3],** il est mentionné que la vessie thermoplastique est obtenue par extrusion-soufflage ou rotomoulage, en utilisant de préférence un polyéthylène haute ou moyenne densité. Dans le document **[4],** des vessies d'étanchéité en polyéthylène, polypropylène ou polyamide sont obtenues par rotomoulage. Dans le document **[5],** il est précisé que la vessie en nylon 11 est réalisée par rotomoulage. Dans le document **[6],** il est mentionné que la vessie est obtenue à partir d'un matériau thermoplastique qui est extrudé, soufflé ou rotomoulé. Dans les documents **[7]** et **[8],** il est mentionné que la vessie thermoplastique peut être moulée par extrusion, soufflage ou par rotomoulage.

L'injection est rarement utilisée pour des limitations techniques et des questions de coût de presse et de moule. En effet, les vessies d'étanchéité peuvent faire jusqu'à 150 litres de volume interne, avec des épaisseurs de plusieurs centimètres. Le thermoformage est rarement utilisé, bien qu'il soit techniquement possible d'utiliser cette technologie pour réaliser de telles vessies d'étanchéité.

La technologie actuelle du rotomoulage de matériaux thermoplastiques en fusion présente un intérêt particulier. En effet, elle permet :

- de pouvoir fabriquer des pièces de grande dimension, allant jusqu'à 150 litres, voire au-delà ;
- de pouvoir insérer une ou plusieurs embase(s) (conduit de raccordement permettant de remplir la vessie de gaz et de la vider), et ceci, sans collages lors de la mise en oeuvre ; et
- de fournir des vessies d'étanchéité épaisses et homogènes.

Le site web **[9]** de l'Association Française de Rotomoulage (AFR) décrit un protocole de rotomoulage par fusion d'un matériau thermoplastique.

Dans tous ces procédés, le matériau thermoplastique est fondu pour être mis en forme à la géométrie de la vessie désirée, puis doit être refroidit avant d'être démoulé. De nombreux défauts de la vessie résultent de cette fusion, notamment la formation de réticulas, d'infondus, de microporosités, et d'oxydations du matériau thermoplastique. Ces défauts nuisent aux performances finales d'étanchéité de la vessie, et donc aux performances du réservoir. De plus, dans le cas du rotomoulage, même si le collage de l'embase à la vessie n'est pas nécessaire, l'étanchéité entre l'embase

et la vessie n'est pas toujours satisfaisante, du fait de la fluidité du matériau thermoplastique en fusion qui est insuffisante pour épouser intimement les formes de l'embase. Par ailleurs, cette fluidité du matériau en fusion ne peut pas être augmentée par élévation de la température sans provoquer une altération chimique dudit matériau. En outre, les procédés utilisés prennent beaucoup de temps, prolongé encore par la durée de refroidissement du matériau après moulage de la vessie, due notamment à l'inertie du moule.

De même, le brevet US 4,705,468 et le brevet US 6,298,553 décrivent respectivement la fabrication d'un réservoir à pression par rotomoulage et un procédé destiné à mouler un réservoir à pression sans soudure dans lequel est encapsulé un échangeur de chaleur. Le procédé décrit dans ces deux brevets est un rotomoulage classique utilisant un matériau thermoplastique fondu.

Le polyamide 6 (PA6), est le thermoplastique qui apparaît le plus intéressant pour la fabrication de vessies d'étanchéité, compte tenu du compromis entre ses propriétés barrières aux gaz, notamment hydrogène, et ses propriétés mécaniques sur une large plage de température allant de -40°C à +100°C. Malheureusement, dans les techniques de l'art antérieur, le PA6 est toujours mal adapté au rotomoulage qui, comme les autres technologies de moulage des matériaux thermoplastiques, nécessite de fondre le matériau sous forme de poudre pour lui donner la forme voulue puis le refroidir. Cette fusion entraîne les défauts identifiés ci-dessus qui nuisent aux performances finales du réservoir. Le développement de thermoplastiques, par exemple de PA6, de grades plus adaptés au rotomoulage, c'est-à-dire ayant une teneur en eau des poudres, une viscosité, une masse moléculaire, des anti-oxydants, etc. ne permet pas de résoudre ces défauts. Par ailleurs, l'évolution de la technologie des rotomouleuses, par exemple rotomoulage sous azote, refroidissement contrôlé, diminution du temps de cycle, ne permet pas non plus de résoudre ces défauts. En effet, par exemple, la fusion du PA6 commençant à partir de 200°C environ, cette étape de fusion est dégradante chimiquement car le PA6 en fusion doit rester de 5 à 15 minutes au-dessus de sa température de fusion avec des températures de procédé dépassant de 40°C parfois la température de fusion.

Les documents **[10]** à **[15]** montrent l'état de l'art actuel, les développements en cours, et surtout quels sont les thermoplastiques et leur mode de mise en oeuvre pour le développement des réservoirs de type IV, pour application pile à combustible.

La demande de brevet japonais 7-167392 , étant l'état de la technique le plus proche, décrit un conteneur et un procédé pour fabriquer un tel conteneur. Le procédé pour préparer le réservoir du conteneur décrit dans cette demande implique (i) une $1^{ère}$ étape de chauffage pendant environ 10 min à une température prédéterminée de polymérisation (220-300°C) d'un mélange très visqueux comprenant l'oligomère obtenu à partir de monomères liquéfiés et le catalyseur de polymérisation alors que le moule métallique est en rotation et (ii) une $2^{nde}$ étape de chauffage à une température prédéterminée de moulage (220-300°C) du matériau en forme.

Le brevet US 3,417,097 décrit un procédé de rotomoulage de grands objets creux tels que des réservoirs pour le stockage sous pression, présentant une épaisseur comprise entre 0,25 et 2,5 mm. Ce procédé basé sur la « puddle technique » comprend deux étapes de chauffage. La première étape de chauffage est mise en oeuvre à une température entre le point de fusion du monomère et le point de fusion du polymère résultant (140-180°C) pendant que le moule est mis en rotation jusqu'à ce que la charge polymérisée soit complètement distribuée sur la surface interne du moule. La seconde étape de chauffage à une température de 150-175°C est utilisée pour obtenir un polymère cristallisé présentant au moins 20% de cristallinité. De plus, dans le procédé du brevet US 3,417,097, la viscosité du mélange mis en oeuvre est un paramètre très important, ce dernier devant être très fluide et suivre un profil de viscosité souhaité durant la première étape de chauffage. Cette gamme de viscosité au même titre que la tension de surface et l'adhésion du mélange sur les parois du moule est essentielle pour obtenir un article fin et homogène.

La demande de brevet FR 2 125 347 propose un procédé de fabrication, à partir de polyamides ou de copolyamides, d'objets moulés du type de réservoirs creux pour solvants, carburants et huiles et pour des récipients de grande capacité. Le procédé utilisé dans cette demande comprend une polymérisation anionique de lactame en polyamide dans un moule en rotation et nécessite l'utilisation d'emballages soudés pour séparer les catalyseurs et co-catalyseurs du lactame, lesdits emballages se dissolvant dans le lactame en fusion une fois le mélange comprenant le lactame et les emballages soudés, porté à une température permettant une telle fusion.

Aucune technique de l'art antérieur n'apporte, de solution satisfaisante aux nombreux problèmes précités.

Il existe donc un réel besoin d'un procédé palliant ces défauts, inconvénients et obstacles de l'art antérieur, en particulier d'un procédé permettant d'obtenir une vessie d'étanchéité pour un réservoir de type IV ne présentant pas les défauts précités, plus rapide, et à coût réduit.

Ce procédé doit permettre notamment la fabrication d'une vessie pour pile à combustible basse température (PEMFC) pour laquelle le stockage de l'hydrogène effectué sous des pressions allant de $350x10^5$ Pa à $700x10^5$ Pa, voire $1000x10^5$ Pa, nécessite des réservoirs légers, sûrs et peu coûteux, notamment pour le stockage embarqué (transports).

## EXPOSÉ DE L'INVENTION

La présente invention a précisément pour but de résoudre les problèmes précités de l'art antérieur en fournissant un procédé de fabrication d'un réservoir composite de type IV, tel que défini dans les revendications 1 à 12, ledit procédé comprenant une étape de polymérisation d'un monomère précurseur dudit polymère thermoplastique en ledit polymère thermoplastique dans un moule en rotation, appelé aussi rotomoule, chauffé à une température de travail supérieure ou égale à la température de fusion dudit monomère et inférieure à la température de fusion dudit polymère de manière à former ladite vessie par polymérisation dudit monomère couplée à un rotomoulage et sans fusion du polymère thermoplastique obtenu.

L'invention décrit également un procédé de fabrication d'une vessie d'étanchéité aux gaz d'un réservoir composite de type IV, ladite vessie étant constituée d'un polymère thermoplastique, ledit procédé comprenant les étapes suivantes :

(a).préparation d'un mélange de polymérisation comprenant le monomère précurseur du polymère thermoplastique, un catalyseur de polymérisation et un activateur de la polymérisation ;
(b) polymérisation dudit mélange en ledit polymère thermoplastique dans un moule en rotation chauffé à une température de travail supérieure ou égale à la température de fusion dudit monomère et inférieure à la température de fusion dudit polymère de manière à former ladite vessie par polymérisation dudit monomère couplée à un rotomoulage et sans fusion du polymère thermoplastique obtenu ;
(b1) éventuellement répétition des étapes (a) et (b) de façon à obtenir une vessie à plusieurs couches de polymère thermoplastique ; et
(c) démoulage de la vessie de polymère thermoplastique obtenu munie de ladite, au moins une embase; et
(d) mise en place du renfort mécanique externe de la vessie qui assure la forme mécanique du réservoir.

Dans la présente invention, le polymère est fabriqué et moulé en une seule étape dans un moule et à une température inférieure à sa température de fusion. Le procédé de la présente invention part non plus du polymère thermoplastique fondu comme dans l'art antérieur, mais de ses monomères qui sont polymérisés dans le moule en rotation à une température inférieure à la température de fusion du polymère obtenu. Le polymère se forme alors en même temps qu'il épouse la forme du moule. On peut alors parler de rotomoulage réactif puisque le moule de rotomoulage sert à la fois de réacteur chimique et de moule donnant la forme de la vessie à proprement parler.

La réaction de polymérisation du monomère utilisée dans la présente invention est une réaction chimique tout à fait classique, qui permet de polymériser un monomère précurseur d'un polymère thermoplastique en ledit polymère thermoplastique. L'homme du métier spécialisé en chimie organique n'aura aucun mal à mettre en oeuvre cette réaction de polymérisation. Les seules restrictions sont celles indiquée dans la définition du procédé de l'invention, c'est-à-dire celle liées aux spécificités des vessies thermoplastiques des réservoirs à gaz de type IV. En particulier, il est préférable que la vessie obtenue soit étanche au gaz qui y sera stocké, même aux pressions indiquées ci-dessus.

C'est pourquoi, selon l'invention, le monomère précurseur du polymère thermoplastique utilisé est de préférence un monomère précurseur d'un des polymères thermoplastiques utilisés pour la fabrication de telles vessies.

Selon l'invention, de préférence, le polymère thermoplastique est un polycaprolactame et le monomère son précurseur, la polymérisation du monomère étant une polymérisation anionique. Dans ce cas, par exemple, le monomère peut être un caprolactame ou un ε-caprolactame ou un mélange de ceux-ci.

Selon l'invention, la polymérisation du monomère est de préférence réalisée en présence d'un activateur et/ou d'un catalyseur. Leur rôle dans la polymérisation d'un monomère organique est bien connu de l'homme du métier et ne nécessite pas d'être précisé davantage ici. On peut citer, à titre d'exemple, la polymérisation anionique du poly α-méthylstyrène (PAM) à partir du monomère α-méthylstyrène, de l'activateur de la famille des organolithien (par exemple un diphénylalkyllithium et du catalyseur éther couronne. On peut également citer, à titre d'exemple, la polymérisation anionique du polystyrène (PS) à partir du monomère styrène, de l'activateur de la famille des organolithien et du catalyseur tétrahydrofurane (THF).

Par exemple, lorsque le monomère est un caprolactame, l'activateur peut avantageusement être un premier ε-caprolactame substitué, par exemple un acylcaprolactame. Par exemple, lorsque monomère est un caprolactame, le catalyseur peut avantageusement être un deuxième ε-caprolactame substitué, par exemple un sodium lactamate ou un bromomagnésium lactamate. D'autres activateurs et catalyseurs ayant une fonction équivalente dans la réaction de polymérisation en cause peuvent naturellement être utilisés. Les documents **[16]** et **[17]** décrivent un certain nombre d'activateurs et de catalyseurs utilisables pour la mise en oeuvre de la présente invention.

Selon l'invention, l'étape consistant à polymériser le monomère dans le rotomoule afin de former la vessie en polymère thermoplastique est avantageusement réalisée à partir d'un mélange de polymérisation comprenant le monomère précurseur du polymère thermoplastique, un catalyseur de la polymérisation et un activateur de la polymérisation.

Selon l'invention, le mélange de polymérisation peut être préparé avantageusement par mélange d'un premier

mélange comprenant ledit monomère et ledit catalyseur, et un deuxième mélange contenant ledit monomère et ledit activateur. Ainsi, les deux mélanges peuvent être préparés et stockés séparément plusieurs semaines, voir plusieurs mois avant la fabrication de la vessie et mélangés ensembles au moment de la mise en oeuvre de la présente invention.

Le procédé de la présente invention peut également être mis en oeuvre à partir d'un mélange unique comprenant le monomère et le catalyseur, l'activateur de la polymérisation étant ajouté au moment de la mise en oeuvre du procédé de la présente invention. Le mélange peut également être préparé en totalité extemporanément avant d'être introduit dans le moule. L'homme du métier saura aisément adapter la mise en oeuvre du procédé de la présente invention suivant ce qui lui apparaît le plus pratique.

Des exemples de préparation du mélange de polymérisation sont présentés ci-dessous.

Le dosage du monomère utilisé peut se faire à l'état solide, par exemple pour le caprolactame à température ambiante et jusqu'à 70°C environ, ou à l'état liquide, par exemple pour le caprolactame à une température au-dessus de 70°C. Il en est de même pour le catalyseur et l'activateur, ainsi que pour tout autre matière ajoutée au mélange de polymérisation.

Selon l'invention, le mélange de polymérisation peut comprendre en outre un agent de nucléation et/ou des charges et/ou des nanocharges. Ces agents et charges peuvent participer notamment aux propriétés de barrière au gaz et de solidité de la vessie.

Ainsi, les agents de nucléation permettent avantageusement d'augmenter la cristallinité et a fortiori les propriétés barrières du matériau thermoplastique, par exemple du polyamide 6. Selon l'invention, l'agent de nucléation peut être choisi par exemple dans le groupe constitué des talcs et des benzoates de sodium ou de tout autre agent ayant la même fonction, ou un mélange de ceux-ci. Quelque soit l'agent de nucléation, il peut être ajouté au mélange de polymérisation en une quantité allant de 0 à 20% en masse par rapport à la masse totale du mélange de polymérisation introduit dans le moule, généralement de 0,01 à 1% en masse.

Les charges ou nanocharges (en fonction de la taille et/ou du facteur de forme des particules qui les composent) permettent avantageusement d'augmenter la rigidité et/ou améliorer les propriétés thermomécaniques et/ou diminuer la perméation et/ou colorer et/ou diminuer le prix de la vessie fabriquée. Selon l'invention, les charges et/ou nanocharges peuvent être choisies par exemple dans le groupe constitué de feuillets d'argile, de noir de carbone, des silices, des carbonates, des pigments ou de toute autre charge ou nanocharge ayant la même fonction. Par exemple, des feuillets d'argile exfoliés permettent d'améliorer la tenue thermique de la vessie, notamment à l'échauffement lors du remplissage rapide de la vessie en gaz, par exemple en hydrogène. Quelque soit la charge ou nanocharge, elle peut être ajoutée au mélange de polymérisation en une quantité allant de 0 à 40% en masse par rapport à la masse totale du mélange de polymérisation introduit dans le moule, généralement de 1 à 20% en masse.

La quantité de mélange de polymérisation introduite dans le moule détermine, en fonction de la taille du moule, l'épaisseur de la paroi de la vessie fabriquée selon le procédé de la présente invention.

Le choix de cette épaisseur de la paroi de la vessie est fait principalement :

- en fonction des performances recherchées de barrière au gaz stocké, par exemple à l'hydrogène, du thermoplastique (pour l'hydrogène, projets de normes ISO TC 197 et EIHP II qui autorisent une fuite de 1 $cm^3$/litre de réservoir/heure), et
- des performances mécaniques du thermoplastique, notamment de résistance suffisante à la mise en place d'un renfort mécanique externe à la vessie, par exemple par bobinage de fibres de carbone (la vessie servant alors de mandrin), lors de la fabrication du réservoir.

Les trois équations mathématiques auxquelles on peut se rattacher pour la détermination de l'épaisseur de la paroi de la vessie fabriquée (le « dimensionnement ») sont les suivantes:

$$Pe_{mes} = \frac{Fg.e}{\Delta P.S} \text{ en } mol/(m.Pa.s) \text{ où } \begin{cases} Fg = \text{flux de gaz (mol/s)} \\ e = \text{épaisseur de la paroi (m)} \\ \Delta P = \text{différence de pression (Pa)} \\ S = \text{Surface de la paroi } (m^2) \end{cases}$$

(I)

$$\sigma_{rad} = \frac{\frac{L}{D}.P.\left(\frac{4V}{\pi.\frac{L}{D}}\right)^{\frac{2}{3}}}{e.\left(\left(\frac{L}{D}+1\right)\left(\frac{4V}{\pi.\frac{L}{D}}\right)^{\frac{1}{3}}+2e\right)} \quad où : \begin{cases} \sigma_{rad} = \text{contrainte radiale en Pa} \\ L = \text{Longueur du réservoir en m} \\ D = \text{diamètre du réservoir en m} \\ e = \text{épaisseur du réservoir en m} \\ V = \text{volume du réservoir en } m^3 \\ P = \text{pression de service du réservoir en Pa} \end{cases}$$

(II)

$$\sigma_{axi} = \frac{2P.\left(\frac{4V}{\pi.\frac{L}{D}}\right)^{\frac{2}{3}}}{\left(\left(\frac{4V}{\pi.\frac{L}{D}}\right)^{\frac{1}{3}}+2e\right)^{2}-\left(\frac{4V}{\pi.\frac{L}{D}}\right)^{\frac{2}{3}}} \quad où : \begin{cases} \sigma_{axi} = \text{contrainte axiale en Pa} \\ L = \text{longueur du réservoir en m} \\ D = \text{diamètre du réservoir en m} \\ e = \text{épaisseur du réservoir en m} \\ V = \text{volume du réservoir en } m^3 \\ P = \text{pression de service du réservoir en Pa} \end{cases}$$

(III)

Décrites et expliquées dans les documents **[18]**, **[19]** et **[20]**.

La détermination de l'épaisseur de la paroi de la vessie se décide donc notamment suivant le volume du réservoir fabriqué, le rapport Longueur/Diamètre du réservoir (et donc de la surface développée), les contraintes mécaniques acceptables, et la pression de service du réservoir fabriqué.

Selon l'invention, la vessie a généralement une paroi d'épaisseur définie pour supporter la fuite du gaz à la pression à laquelle il doit être stocké, appelée pression de service, habituellement comprise entre $2x10^7$ et $7x10^7$ Pa. La présente invention s'applique bien entendu à d'autres pressions que celles-ci, l'épaisseur de la vessie étant choisie notamment en fonction de cette pression de service et de la nature du gaz. En général, l'épaisseur de la vessie est comprise entre 1 mm et 20 mm, préférentiellement entre 2 mm et 10 mm.

Dans le procédé de l'invention, la polymérisation est effectuée dans un moule en rotation. Pour cela, on peut utiliser une rotomouleuse classique, par exemple telle que celles décrites dans les documents précités relatifs au rotomoulage d'un matériau thermoplastique en fusion. De préférence le moule de la rotomouleuse est suffisamment étanche aux liquides, en particulier au mélange de polymérisation selon l'invention.

Selon l'invention, la polymérisation est effectuée à une température, appelée température de travail, qui est supérieure ou égale à la température de fusion dudit monomère et inférieure à la température de fusion dudit polymère de manière à former ladite vessie par polymérisation dudit monomère couplée à un rotomoulage et sans fusion du polymère thermoplastique obtenu. Ainsi, le moule étant mis en rotation, la polymérisation conduit à une formation du matériau thermoplastique sur toute la surface interne du moule, sans qu'il y ait fusion dudit matériau thermoplastique. Il s'agit donc d'un rotomoulage sans fusion. Lorsque la température de fusion du polymère est atteinte ou dépassée lors de la polymérisation du monomère, cela conduit aux défauts précités des vessies de l'art antérieur obtenues par rotomoulage du matériau en fusion.

Selon l'invention, lorsque le monomère utilisé est sous forme solide, le mélange de polymérisation peut être préchauffé pour faire fondre le monomère avant de le polymériser dans le moule en rotation. Par exemple, selon l'invention, dans l'étape (a), le mélange de polymérisation peut en outre être préchauffé de manière à faire fondre le monomère, à une température de préchauffage supérieure ou égale à la température de fusion dudit monomère et inférieure à la température de fusion dudit polymère. L'homme du métier saura aisément déterminer la température de fusion du monomère, par exemple au moyen d'un banc de fusion. La température de fusion du polymère thermoplastique obtenu peut également être aisément déterminée par l'homme du métier, par exemple également au moyen d'un banc de fusion.

Par exemple lorsque le monomère est un caprolactame, selon l'invention, la réaction de sa polymérisation en

polycaprolactame est réalisée à une température comprise entre 70°C et 220°C, de préférence entre 100 et 180°C, donc inférieure à la température de fusion du PA6 et donc bien inférieure à sa température de rotomoulage de l'art antérieur.

Selon l'invention, de manière avantageuse, le mélange de polymérisation peut être chauffé à ladite température de travail avant d'être introduit dans le moule. Ainsi, la polymérisation peut être déclenchée dès l'introduction du mélange dans le rotomoule.

Pour les mêmes raisons, selon l'invention, de préférence, le rotomoule est de préférence chauffé à ladite température de travail avant introduction dudit mélange de polymérisation dans le moule.

Le chauffage du moule peut être réalisé par exemple au moyen d'un four dans lequel le moule est introduit. On peut éventuellement se passer de four en utilisant un moule avec chauffage intégré (dispositif de chauffage intégré au moule), par exemple par des lampes infrarouges (IR), des résistances électriques, ou un moule double paroi avec circulation d'un fluide caloporteur.

Il est dans certains cas possible de ne pas utiliser de four lors de la polymérisation elle-même, compte tenu de l'inertie thermique du moule et de la rapidité de la réaction de polymérisation, notamment lorsque cette polymérisation est de type anionique.

Le moule peut avantageusement être équipé d'un évent et d'une entrée d'un gaz neutre lorsque la réaction de polymérisation mise en oeuvre doit se faire sous gaz neutre (inerte). Dans ce cas, le moule est alors purgé par un gaz inerte pour la mise en oeuvre de l'étape de polymérisation. C'est le cas par exemple lorsque le monomère est un caprolactame. Le gaz neutre peut être par exemple de l'azote ou tout autre gaz neutre connu de l'homme du métier. Dans l'exemple des caprolactames, le gaz neutre est de toute préférence sec, afin que la réaction de polymérisation se fasse en milieu anhydre. En effet, les meilleurs résultats de polymérisation et d'étanchéité ont été obtenus dans ces conditions opératoires pour les caprolactames, par exemple pour obtenir des vessies en PA6. Cela peut être le cas pour d'autres monomères. L'homme du métier saura aisément adapter la mise en oeuvre du procédé de l'invention afin que la polymérisation du monomère conduise à la fabrication de la vessie souhaitée.

Selon l'invention, le moule est mis en rotation suivant deux axes, de manière à ce que la polymérisation se fasse sur toute la surface interne du moule et conformément à celle-ci. Cette double rotation peut être assurée en marge d'un rotomoule classique.

En rotomoulage de matériau en fusion selon l'art antérieur, les vitesses de rotation de l'axe primaire et de l'axe secondaire sont entre 1 et 20 tpm (« tpm » : tours par minute), le plus souvent entre 2 et 10 tpm. Dans le procédé de la présente invention, les vitesses de rotation sont de préférence plus élevées, du fait de la fluidité du monomère qui est supérieure à celle du matériau en fusion. Ainsi, selon l'invention, la vitesse de rotation du moule est de préférence de 5 à 40 tpm, de préférence encore de 10 à 20 tpm. Ces vitesses de rotations préférées ont donné de très bons résultats dans le cas des caprolactames.

Le temps de polymérisation dépend bien entendu du monomère utilisé, ainsi que de la présence et de la nature des catalyseurs et/ou activateurs. Un des nombreux avantages de la présente invention est que les réactions de polymérisation peuvent être très rapides. Par exemple, lorsque le monomère utilisé est un caprolactame, une polymérisation anionique en PA6 est terminée après quelques minutes, en général de 2 à 10 minutes, souvent autour de 4 minutes.

Lorsque la polymérisation est terminée, en particulier lorsque la longueur des chaînes est suffisante, et la cristallisation accomplie (organisation des chaînes de polymère), le cas échéant le chauffage est arrêté ou le moule en rotation est sorti du four ; la rotation du moule est arrêtée, et le moule est ouvert. On peut refroidir le moule quelques minutes, notamment pour faciliter la manutention de la pièce, afin d'éviter tout risque de brûlures. La vessie est alors démoulée. Il en résulte un gain de temps évident par rapport aux procédés de l'art antérieur, notamment compte tenu de l'inertie du moule, où la température de rotomoulage en fusion était bien supérieure à celle utilisée dans le procédé de la présente invention, et où il était nécessaire d'attendre que le matériau passe de l'état fondu à l'état solide.

Selon un mode particulier de réalisation de la présente invention, plusieurs étapes de polymérisation peuvent être réalisées successivement pour former une vessie d'étanchéité à plusieurs couches de polymère thermoplastique. Ces couches peuvent être identiques ou différentes, en épaisseur ou en composition.

Par exemple, pour obtenir des épaisseurs de paroi de vessies supérieures à 3 à 4 mm, avantageusement, plusieurs étapes de polymérisation successives seront mises en oeuvre jusqu'à atteindre l'épaisseur souhaitée. Selon l'invention, ces étapes de polymérisation peuvent utiliser un monomère précurseur du polymère thermoplastique identique ou différent d'une étape à l'autre. Il suffit d'introduire le ou les mélanges de polymérisation successivement dans le moule, après chaque étape de polymérisation achevée. Par exemple, avec une polymérisation anionique, il est aisé de faire 5 mm par couche, mais une épaisseur de 3 mm est préférable. Ainsi pour une épaisseur de paroi de vessie de 6 mm, il est préférable de faire deux couches successives du matériau thermoplastique.

Par exemple lorsque la couche la plus interne de la vessie, c'est à dire celle qui sera en contact avec le gaz sous pressions lors de son stockage dans le réservoir de type IV fabriqué, doit avoir des propriétés particulières par rapport audit gaz stocké, la dernière étape de polymérisation peut avantageusement être réalisée au moyen d'un polymère thermoplastique présentant lesdites propriétés particulières par rapport audit gaz stocké. Par exemple, il peut

s'agit d'une couche interne en PA6 contenant des nanocharges de type montmorillonite afin d'augmenter la teneur thermomécanique du liner lors du remplissage rapide du réservoir.

Par exemple lorsque la couche la plus externe de la vessie, c'est à dire celle qui serait en contact avec la structure de renfort externe du réservoir de type IV fabriqué, doit avoir des propriétés particulières par rapport à ladite structure de renfort, la dernière étape de polymérisation peut avantageusement être réalisée au moyen d'un polymère thermoplastique présentant ces propriétés particulières par rapport à ladite structure de renfort. Par exemple, il peut s'agir d'une couche externe en PA6 sans agent nucléant afin d'augmenter la résistance aux chocs du liner lors avant la réalisation du bobinage du composite (manipulations).

Selon l'invention, la vessie obtenue peut en outre être soumise à un ou plusieurs post-traitement(s) destiné(s) à revêtir sa surface interne ou externe d'une ou de plusieurs couche(s) mince(s) afin d'améliorer encore les propriétés d'étanchéité de la vessie au gaz qui y sera stocké (propriétés barrières) et/ou de lui conférer des propriétés chimiques particulière, par exemple de résistance à des attaques chimique, une qualité de grade alimentaire ou une meilleure tenue aux vieillissements. Ce post-traitement peut consister en un traitement de dépôt de type SiOx, où $0 \leq x \leq 2$, ou bien $Si_yN_zC_t$, où $1 \leq y \leq 3$, $0{,}2 \leq z \leq 4$ et $0 \leq t \leq 3$, par dépôt en phase vapeur assisté par Plasma (PECVD), d'aluminium par dépôt physique en phase vapeur (PVD), dépôt de type époxy par réticulation chimique, ou fluoration avec du $CF_4$, par exemple. Les documents **[21]** et **[22]** décrivent ce type de post-traitement bien connu de l'homme du métier dans la fabrication des vessies de réservoir de type IV, et utilisables sur la vessie obtenue par le procédé de la présente invention.

La présente invention permet donc la fabrication de vessies d'étanchéité thermoplastiques, y compris de type polyamide, et avantageusement de type polyamide 6 (éventuellement modifié et/ou chargé), susceptible d'entrer dans la fabrication de tout réservoir composite destiné au stockage de gaz, en particulier de gaz sous pression. Les vessies d'étanchéité fabriquées par le procédé de l'invention sont plus performantes en terme de propriétés mécaniques et barrières aux gaz que celles de l'art antérieur car il n'y a plus d'effets de coupure de chaînes, d'oxydation, de réticulation, de polycondensation, de porosité finale, de contraintes résiduelles ou d'inhomogénéité, etc., inhérents aux phénomènes de fusion et de solidification des polymères thermoplastiques. En outre, l'état de surface intérieur de ces vessies est bien meilleur que celui de vessies obtenues par un procédé de matériau en fusion de l'art antérieur. Ces propriétés améliorées se répercutent évidemment toutes sur les propriétés des réservoirs qui sont fabriqués à partir de ces vessies.

L'invention se rapporte donc également à un réservoir composite de stockage d'un gaz sous pression, tel que défini dans les revendications 13 à 15 ledit réservoir comprenant une vessie de polymère thermoplastique d'étanchéité audit gaz sous pression obtenue suivant le procédé l'invention.

Par exemple, la présente invention permet d'obtenir un réservoir tel que défini dans la revendications 13 à 15.

Ce type de réservoir est appelé réservoir de type IV. La vessie de matériau thermoplastique fabriquée selon le procédé de l'invention permet d'obtenir un réservoir composite de type IV dont les performances mécaniques et barrières sont bien supérieures à celles d'un même réservoir mais dont la vessie (constituée du même matériau thermoplastique) est fabriquée par extrusion soufflage, thermoformage, injection ou rotomoulage du matériau thermoplastique en fusion.

Selon l'invention, la vessie d'étanchéité est de préférence une vessie de polyamide. Avantageusement, la vessie de polyamide est une vessie de polycaprolactame. En effet, les meilleurs résultats actuels de mise en oeuvre de la présente invention sont obtenus avec ce polymère.

Selon l'invention, ladite, au moins une, embase métallique assure la connexion intérieur/extérieur du réservoir pour son remplissage et pour l'utilisation du gaz stocké. L'embase peut être une embase classiquement utilisée pour ce type de réservoir, par exemple une embase en aluminium. Une ou plusieurs embase(s) peuvent être disposée(s) dans le moule pour obtenir une ou plusieurs embases sur la vessie fabriquée. La ou les embase(s) peut (peuvent) être soumise à un traitement destiné à améliorer encore l'étanchéité de la jonction embase/vessie, par exemple un traitement tel que celui décrit dans le document **[4].**

L'inclusion d'une ou plusieurs embase(s) sur la vessie peut être réalisée suivant les procédés classiques connus de l'homme du métier, par exemple suivant les procédés décrits dans les documents **[4]** et **[23],** ou dans un des documents précités où au moins une embase est prévue. Toutefois, dans la présente invention, le polymère thermoplastique n'est pas fondu pour être joint à l'embase, il est formé par polymérisation du monomère à la fois dans le moule et sur la ou les embases positionnée dans le moule avant le rotomoulage suivant le procédé de la présente invention. La ou les embase(s) peut (peuvent) être positionnée(s) par exemple de la manière décrite dans le document **[23].** La vessie obtenue suivant le procédé de l'invention, munie de la ou des embase(s), est ensuite démoulée.

Grâce au procédé de la présente invention, le risque de fuite au niveau des embases est fortement diminué, car lors du rotomoulage, la viscosité du monomère en début de polymérisation est très faible et il diffuse très facilement dans les interstices et/ou les points d'accroche de l'embase.

Selon l'invention, le renfort mécanique externe de la vessie assure la tenue mécanique du réservoir. Il peut s'agir de l'un quelconque des renforts connus de l'homme du métier disposés habituellement autour des vessies de réservoirs de type IV. Il peut s'agir par exemple d'un enroulement filamentaire. Cet enroulement filamentaire peut être

constitué par exemple de fibres de carbone et de résine thermodurcissable. Par exemple, la fibre de carbone préalablement imprégnée de résine époxy non réticulée peut être enroulée autour de la vessie maintenue par la ou les embases, par exemple suivant l'un des procédés décrits dans les documents **[4], [5], [24]** ou **[25].** La vessie, qui est une structure autosupportée, sert en fait de mandrin à cet enroulement filamentaire. Un réservoir de type IV est ainsi obtenu.

La présente invention trouve une application pour le stockage de tout gaz sous pression, par exemple d'hydrogène gazeux, d'hélium, de gaz naturel, d'air comprimé, d'azote, d'argon, d'hytane (marque de commerce), etc. La présente invention est particulièrement adaptée pour la fabrication de piles à combustible, en particulier à basse température, pour lesquelles les exigences mécaniques sont très strictes et à hautes températures, pour lesquelles les exigences d'étanchéité sont très strictes.

D'autres caractéristiques et avantages apparaîtront encore à l'homme du métier à la lecture des exemples qui suivent donnés à titre illustratif et non limitatif en référence aux figures annexées.

**Brève description des figures**

- La figure 1 représente schématiquement un exemple d'architecture d'un réservoir (1) de type IV fabriqué à partir d'une vessie (2) conformément à la présente invention. Cette figure représente les fonctionnalités des différents éléments qui composent ce réservoir.
- La figure 2 est un graphique présentant des courbes de température (T) en °C en fonction du temps (t) en minutes : du four (courbe 10), du rotomoule (courbe 12), et de l'atmosphère dans le rotomoule (courbe 14) lors de la mise en oeuvre d'un procédé de rotomoulage de PA6 de l'art antérieur, c'est-à-dire en faisant fondre le matériau thermoplastique (exemple 2 ci-dessous).
- La figure 3 est un graphique présentant des courbes de température (T) en °C en fonction du temps (t) en minutes : du four (courbe 20), du rotomoule (courbe 22), et de l'atmosphère dans le rotomoule (courbe 24) lors de la mise en oeuvre d'un procédé de rotomoulage de PA6 selon la présente invention, c'est-à-dire à une température inférieure à la température de fusion du matériau thermoplastique (exemple 2 ci-dessous).
- La figure 4 est un graphique présentant les courbes de température (T) en °C en fonction du temps (t) en minutes : du four (courbe 30) et du gaz dans le rotomoule (courbe 32) lors de la mise en oeuvre d'un procédé de rotomoulage de PA6 selon la présente invention, c'est-à-dire à une température inférieure à la température de fusion du matériau thermoplastique (exemple 3 ci-dessous).
- Les figures 5A, 5B, 5C, 5D et 5E présentent schématiquement différents modes de préparation de mélanges de polymérisation utilisables pour la mise en oeuvre du procédé de la présente invention.

**EXEMPLES**

**Exemple 1 : fabrication d'une vessie de réservoir par un procédé de rotomoulage de l'art antérieur : rotomoulage de PA 6 par voie fondue**

Le matériau utilisé dans cet exemple est du polyamide 6 (ou polycaprolactame). Le Fournisseur est Rhodia Engineering Plastics (France), le grade commercial est TECHNYL C217 (marque de commerce).

Le protocole de rotomoulage qui a été mis en oeuvre dans cet exemple est le suivant :

- Chauffage du four à une température de 350°C ;
- Quantité de matériau thermoplastique : 400 g ;
- Préchauffage moule à 55°C ;
- Cuisson : 15 min ;
- Refroidissement après rotomoulage : 30 min ;
- Vitesses de rotation du moule suivant au moins deux axes : rotation primaire : 2 tpm et rotation secondaire : 1,5 tpm ;
- Rotomoulage effectué sous azote ;
- Rotomouleuse : type shuttle de marque « STP Equipment » et de référence LAB40.

La figure 2 annexée est un graphique présentant les courbes de température (T) en °C en fonction du temps (t) en minutes : du four (courbe 10), du rotomoule (courbe 12), et de l'atmosphère dans le rotomoule (courbe 14) lors de la mise en oeuvre de ce protocole.

Les principales propriétés du matériau polymère formant la vessie sont les suivantes :

- masse volumique : 1,14 g/$cm^3$

- masse molaire : entre 20 et 40 kg/mol
- température de fusion : 222°C
- module d'élasticité : 2,9 GPa (EH 0-23°C)
- contrainte au seuil d'écoulement : 85 MPa (EH 0-23°C)
- déformation à la rupture : 100% (EH 0-23°C)
- perméation hydrogène (4x10$^5$ Pa, 27°C) : 5,4.10$^{-16}$ mol/m.Pa.s.
- Etat de surface intérieure rugueux.

**Exemple 2 : fabrication d'une vessie de réservoir par un procédé de rotomoulage de la présente invention : rotomoulage réactif de PA6**

La polymérisation est une polymérisation anionique. Le monomère précurseur est ε-caprolactame. Le fournisseur est la société Fluka. Il a une pureté supérieure à 98%, et une température de fusion de 69°C. Le polymère thermoplastique obtenu est du polyamide 6 (ou polycaprolactame):
En tant que catalyseur de la polymérisation, on a utilisé du sodium-caprolactame (17%) dans du caprolactame. Ce catalyseur est fourni par exemple par la société Brüggemann Chemical.. Grade commercial : Bruggolen C10 (marque déposée) ; forme : paillettes ; température de fusion : 60°C environ.
En tant qu'activateur de la polymérisation, on a utilisé du diisocyanate (17%) à blocs dans du caprolactame. Cet activateur est fourni par exemple par la société Brüggemann Chemical. Grade commercial : Bruggolen C20 (marque déposée) ; forme : poudre ; température de fusion : supérieure à 60°C.
L'équation chimique de la réaction de polymérisation anionique mise en oeuvre dans cet exemple est la suivante :

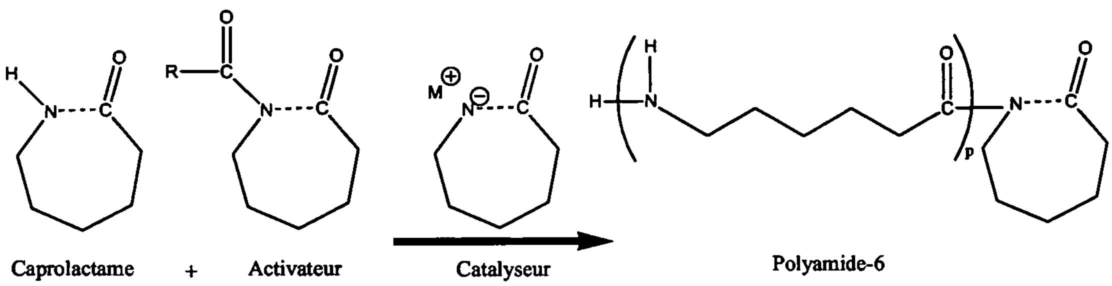


dans laquelle p est le degré de polymérisation. Ce degré de polymérisation est généralement tel que 1 ≤ p ≤ 100 000.
Deux mélanges de polymérisation ont été utilisés :

- Le premier contenait du caprolactame (monomère solide à température ambiante) et du catalyseur (solide à température ambiante).
- Le deuxième contenait du caprolactame (monomère solide à température ambiante) et de l'activateur (liquide à température ambiante).

Les deux mélanges ont été portés à une température supérieure à 70°C (tous les composants sont alors liquides) pour les homogénéiser et les introduire ensuite dans le moule de la rotomouleuse.
Le protocole fonctionne également avec un seul mélange contenant l'ensemble du caprolactame, le catalyseur. Après l'avoir chauffé à 70°C au moins, on introduit ce mélange liquide dans le moule, puis on injecte l'ensemble de l'activateur liquide dans le moule.
Le protocole de rotomoulage qui a été mis en oeuvre dans cet exemple est le suivant :

- Préparation d'un premier mélange de 188 g de ε-caprolactame Fluka (marque de commerce) et de 12 g de catalyseur Bruggolen C10 (marque déposée) ;
- Préparation d'un deuxième mélange de 188 g de ε-caprolactame Fluka (marque de commerce) et de 12 g d'activateur Bruggolen C20 (marque déposée) ;
- Préchauffage des deux mélanges à 130°C ;
- Chauffage du four à une température de 220°C ;
- Préchauffage du rotomoule à 160°C ;
- Addition du premier mélange au deuxième mélange et introduction dans le moule préchauffé ;
- Vitesses de rotation du moule suivant au moins deux axes : rotation primaire : 10 tpm et rotation secondaire : 5,2 tpm ;

- Rotomoulage effectué sous azote sec ;
- Machine : type shuttle de marque « STP Equipment » et de référence LAB40 ;
- Quantité de matière totale utilisée (monomère + catalyseur + activateur) : 400 g ;
- Durée de la polymérisation : 5 min ;
- Durée de refroidissement : 10 min.

La figure 3 est un graphique présentant les courbes de température (T) en °C en fonction du temps (t) en minutes : du four (courbe 20), du rotomoule (courbe 22), et de l'atmosphère dans le rotomoule (courbe 24) lors de la mise en oeuvre de ce protocole.

Une vessie thermoplastique de polyamide 6 est obtenue. Les Principales propriétés du polymère sont les suivantes :

- masse volumique : 1,15 g/cm$^3$;
- masse molaire : 50-300 kg/mol ;
- température de fusion : 225°C ;
- module d'élasticité : 3,6 GPa (EH 0-23°C) ;
- contrainte au seuil d'écoulement . 90 MPa (EH 0-23°C) ;
- déformation à la rupture : 70% (EH 0-23°C) ;
- perméation hydrogène : (4x10$^5$ Pa, Pa, 27°C) : 3,7.10$^{-17}$ mol/m.Pa.s.
- Etat de surface intérieure parfaitement lisse.

Par rapport à la vessie obtenue dans l'exemple 1, c'est à dire suivant un procédé de rotomoulage de l'art antérieur, la vessie de la présente invention présente donc non seulement des propriétés d'étanchéité améliorées, mais aussi un bien meilleur état de surface, et une masse moléculaire plus importante.

Le procédé de la présente invention permet donc de manière tout à fait inattendue, et contrairement aux nombreux préjugés et obstacles précités rencontrés avec les techniques de l'art antérieur, de fabriquer par rotomoulage des vessies constituées de polyamide 6 ayant d'excellentes propriétés d'étanchéité.

La vessie PA6 ainsi formée n'est ni oxydée, ni réticulée ; le polymère n'a pas subi de coupures de chaînes et ne présente ni infondus ni porosités résiduelles.

L'addition d'un agent de nucléation tel que du talc ou du benzoate de sodium, à une concentration de 0,01 à 1% en masse du mélange de monomère, de catalyseur et d'activateur, permet d'augmenter la cristallinité du PA6 obtenu.

L'addition d'une charge telle que des feuillets d'argile ou du noir de carbone, à une concentration pouvant aller jusqu'à 40% en masse du mélange monomère + catalyseur + d'activateur, permet d'améliorer ses propriétés mécaniques et/ou de diminuer la perméation et/ou de colorer et/ou de diminuer le prix de la vessie obtenue.

**Exemple 3 : Fabrication d'une vessie de réservoir à deux couches par un procédé de rotomoulage conforme à la présente invention**

Sur la base du même protocole que celui qui est décrit dans l'exemple 2 ci-dessus, on a réalisé dans cet exemple un liner de 3 mm d'épaisseur totale en deux couches, une couche d'épaisseur de 1,8 (couche externe) et une couche d'épaisseur 1,2 mm (couche interne).

La polymérisation était une polymérisation anionique. Le monomère précurseur qui a été utilisé est l'ε-caprolactame présentant les caractéristiques suivantes :

- Fournisseur : DSM Fibre Intermediate B.V.
- Grade : AP-caprolactame
- Température de fusion : 69°C

En tant que catalyseur de la polymérisation, on a utilisé du bromomagnésium-caprolactame (20%) dans du caprolactame dont les caractéristiques sont les suivantes :

- Fournisseur : Brüggemann Chemical
- Grade commercial . Bruggolen C1 (marque déposée)
- Forme : paillettes
- Température de fusion : 70°C environ.

En tant qu'activateur, on a utilisé du de l'acétylhexane lactame dont les caractéristiques sont les suivantes :

- Fournisseur : Brüggemann Chemical
- Grade commercial : Activator 0
- Forme : liquide
- Température de fusion : -13°C

Le polymère thermoplastique qui a été obtenu obtenu est du polyamide 6 (ou polycaprolactame) présentant les principales propriétés finales suivantes :

- masse volumique : 1,15 g/cm$^3$
- masse molaire : 50-300 kg/mol
- température de fusion : 225°C
- module d'élasticité : 3,6 GPa (EHO-23°C)
- contrainte au seuil d'écoulement . 90 MPa (EHO-23°C)
- déformation à la rupture : 70% (EHO-23°C)
- perméation hydrogène (4 bar, 27°C) : 3,7.10$^{-17}$ mol/(m.Pa.s).

Le rotomoulage a été mis en oeuvre sous azote sec dans une rotomouleuse type shuttle, de marque STP Equipment, et de référence LAB40. La figure 4 présente la courbe rotolog (marque déposée) de rotomoulage de cet appareil : en abscisse, le temps en minutes, et en ordonnée, la température en °C. Sur cette figure, la courbe (30) représente la température du four en °C, et la courbe (32) représente la température du gaz à l'intérieur du moule.
Le protocole de rotomoulage qui a été mis en oeuvre dans cet exemple est le suivant :

- température four : 220°C
- préchauffage du moule à 160°C
- quantité de matière totale : 400 g
- pour la couche 1, mélange de 230 g de AP-caprolactame et de 10 g de catalyseur Bruggolen C1 (marque déposée) : appelé mélange 1
- pour la couche 2, mélange de 150 g de AP-caprolactame et de 8 g de catalyseur Bruggolen C1 (marque déposée), appelé mélange 2
- préchauffage des deux mélanges à 130°C
- introduction du mélange 1 dans le moule puis 3 g d'activateur « Activator 0 »
- vitesse rotation primaire : 10 tmp
- vitesse rotation secondaire : 5,2 tpm
- polymérisation : 2,30 minutes
- arrêt de la rotation
- introduction du mélange 2 dans le moule puis 2 g d'activator 0
- vitesse rotation primaire : 10 tpm
- vitesse rotation secondaire : 5,2 tpm
- polymérisation : 4 minutes
- démoulage de la vessie obtenue.

La figure 4, en référence à l'abscisse, permet de suivre dans le temps le protocole de cet exemple : de 0 à 7 minutes : durée du préchauffage du moule ; à 8 minutes : chargement du premier mélange ; à 9 minutes : introduction du moule dans le four ; à 12 minutes : sortie du moule du four et chargement du deuxième mélange ; à 14 minutes : réintroduction du moule dans le four ; et à 19 minutes : démoulage de la vessie.
Ce protocole a permis de fabriquer par rotomoulage des vessies bicouches présentant les propriétés précitées (voir exemple 2). La vessie bicouche formée n'est ni oxydée, ni réticulée, et le polymère n'a pas subi de coupures de chaînes et ne présente ni infondus ni porosités résiduelles.

**Exemple 4 : Préparation du mélange de polymérisation**

Les figures 5A à 5E présentent schématiquement différents modes de préparation de mélanges de polymérisation pour la mise en oeuvre du procédé de la présente invention.
Les produits et conditions opératoires sont ceux décrit dans les exemples de mise en oeuvre ci-dessus.
Sur la figure 5A, on prépare un premier mélange contenant le monomère et l'activateur ; on prépare un deuxième mélange contenant le monomère et le catalyseur ; ces mélanges sont préchauffés, puis mélangés ensemble pour obtenir le mélange de polymérisation qui est alors introduit rapidement dans le rotomoule, afin que la polymérisation commence dans ce dernier.

Sur la figure 5B, le catalyseur, le monomère et l'activateur sont préchauffés indépendamment, puis mélangés ensemble pour obtenir le mélange de polymérisation qui est alors introduit rapidement dans le rotomoule, afin que la polymérisation commence dans ce dernier.

Sur la figure 5C, on prépare un premier mélange contenant le monomère et l'activateur ; on prépare un deuxième mélange contenant le monomère et le catalyseur ; ces mélanges sont préchauffés séparément puis introduits simultanément dans le rotomoule en formant ainsi le mélange de polymérisation, afin que la polymérisation commence dans ce dernier.

Sur la figure 5D, on prépare un premier mélange contenant le monomère et le catalyseur ; on préchauffe séparément d'une part ce premier mélange, et d'autre part l'activateur, puis on introduit simultanément dans le rotomoule le premier mélange et l'activateur préchauffés en formant ainsi le mélange de polymérisation, afin que la polymérisation commence dans ce dernier.

Sur la figure 5E, on prépare un premier mélange contenant le monomère et l'activateur ; on préchauffe séparément d'une part ce premier mélange, et d'autre part le catalyseur, puis on introduit simultanément dans le rotomoule le premier mélange et le catalyseur préchauffés en formant ainsi le mélange de polymérisation, afin que la polymérisation commence dans ce dernier.

De manière générale, de préférence, le mélange de polymérisation n'est pas préparé dans sa totalité (monomère+activateur+catalyseur) avant d'être introduit dans le moule, afin que la polymérisation ne commence pas à l'extérieur du moule. L'homogénéité de la vessie obtenue est ainsi meilleure.

**Exemple 5 : Fabrication d'un réservoir de type IV (voir figure 1)**

Une embase d'aluminium (4) (après avoir été soumise éventuellement à un traitement comme dans le document **[4])** est positionnée dans le moule avant le rotomoulage réactif de la vessie, de la manière décrite dans le document **[23].**

La vessie en PA6 est formée par rotomoulage réactif, par polymérisation anionique in situ, conformément au procédé de la présente invention. Le protocole de l'exemple 2 est utilisé en présence de l'embase. La vessie (2) obtenue, contenant l'embase (4), est démoulée. Le lien embase-vessie est très intime, contrairement à celui d'une vessie obtenue avec un protocole de rotomoulage par fusion du matériau thermoplastique.

L'interface entre la vessie et l'embase aluminium servant à fabriquer le réservoir (1) est meilleure qu'en utilisant le protocole de rotomoulage de l'exemple 1, car la viscosité du monomère en début de réaction est très faible et le matériau en cours de polymérisation diffuse très facilement dans les interstices et/ou les points d'accroche de l'embase. La jonction vessie/embase est donc améliorée. Sur la figure 1, la référence (E) indique une coupe de la vessie permettant de visualiser sur cette figure l'épaisseur de la vessie.

La vessie est ensuite munie d'une structure (6) de renfort. Pour cela, des fibres de carbone préalablement imprégnées de résine époxy non réticulée sont enroulées autour de la vessie maintenue par la ou les embases (la vessie sert de mandrin) suivant l'un des procédés décrits dans les documents **[4], [5], [24]** ou **[25],** par exemple.

Une coque de protection (8) peut ensuite être disposée autour de l'enroulement filamentaire comme représenté en coupe sur la figure 1. Une valve/détendeur peut être vissée sur le réservoir, dans l'embase (non représenté).

Un réservoir de type IV est ainsi obtenu. Ce réservoir présente les spécifications d'étanchéité citées dans l'exemple 2 ci-dessus.

**Exemple 6 : fabrication d'une vessie multicouches PA6**

Par exemple, on peut envisager de fabriquer une vessie bicouche de 6 mm d'épaisseur totale avec une première couche externe en PA6 sans charge spécifique de 3 mm d'épaisseur et une deuxième couche interne en PA6 chargé 15% massique en feuillets d'argile exfoliés pour augmenter la tenue thermique de la vessie (échauffement lors du remplissage rapide en hydrogène par exemple).

Le protocole de l'exemple 2 ci-dessus convient pour fabriquer ce type de vessie. Il est réalisé deux fois : une première fois pour la couche externe de la vessie, en contact avec le rotomoule, et avec un mélange de polymère, de catalyseur et d'activateur ; et une deuxième fois pour la couche interne, en contact avec la couche externe, avec un mélange de polymère, de catalyseur, d'activateur et une charge de 15% en poids de feuillets d'argile exfoliés de montmorillonite préalablement traitée par un ion quaternaire diméthyl tallow benzyle ammonium du fournisseur SÜD CHEMIE et de grade commercial "Nanofil 919" dans le but d'améliorer la tenue thermique de la vessie, notamment à l'échauffement lors du remplissage rapide en hydrogène.

**Exemple 7 : Post-traitement d'une vessie obtenue selon le procédé de l'invention**

Une vessie fabriquée suivant le procédé de la présente invention, par exemple suivant le protocole de l'exemple 2, peut être soumise à un post-traitement tels que ceux cités dans la partie exposé de l'invention ci-dessus, afin d'améliorer

ses propriétés d'étanchéité ainsi que ses propriétés chimique de surface interne et/ou externe.

Des exemples de post-traitement applicables à la vessie sont décrits dans les documents **[26]** et **[27].**

**Liste des références**

[1] FR-A-2 813 232 : Procédé de fabrication d'une pièce de révolution par rotomoulage et pièce obtenue.

[2] FR-A-2 813 235 : Structure et réservoir thermoplastique.

[3] US-A-4 927 038 : "Container for high pressure gases".

[4] US-A-4 925 044 : "Fluid tank and method of manufacturing it".

[5] US-A-5 499 739 : "Thermoplastic liner for and method of overwrapping high pressure vessels".

[6] US-A-6 554 939 : "Container and method of forming the container".

[7] US-A-5 568 878 : "Filament wound pressure vessel having a reinforced access opening".

[8] US-A-6 660 214 : "Pressure vessel manufacture method".

[9] http://www.rotomoulage.org

[10] "Next Generation Hydrogen Tankage", Laurence Livermore National Laboratory, Proceedings of the 2001 U.S. DOE Hydrogen Program Review.

[11] "Hydrogen Composite Tank Program", Quantum Technologies, Proceedings of the 2002 U.S. DOE Hydrogen Program Review.

[12] "Hydrogen Composite Tank Project", Quantum Fuel System Technologies, FY 2003, Progress Report.

[13] "Development of a Compressed Hydrogen Gas Integrated Storage System (CH2-ISS) for Fuel Cell Vehicles", University Applied Physics Laboratory, FY 2003 Progress Report.

[14] "Next Generation Hydrogen Storage", Laurence Livermore National Laboratory, FY 2003 Progress Report.

[15] "Low Permeation Liner for Hydrogen Gas Storage Tanks", Idaho National Engineering & Environmental Laboratory, FY 2003 Progress Report.

[16] US-3,275,733 : "Process for the production of hollow articles of polymerized lactams".

[17] "Anionic Polymerization, Principles and Practical Applications", Henry L. HSIEH et Roderick P. QUIRCK, 1996, Editeur : Marcel Deker, Inc., New York

[18] Revue "Oil & Gas Science and Tecnology", Revue de l'Institut Français du Pétrole, Numéro spécial 2001, May-June, vol.56, n°3, pp. 215-312, t Editions Technip, 27, rue Ginoux, 75737 Paris Cedex 15

[19] Livre, "Introduction des Coques Minces", Patrick Muller, Claire Ossadzow, Hermes Science Publications, Paris, 1999. Hermes Science Publications, 8 quai du Marché-Neuf, 75004 Paris, France

[20] Livre, "Formulaire Technique", Kurt Gleck, 10ème Edition, spt., 1997, Dunod.

[21] "Etude de la nature de couches barrières à l'oxygène réalisées par plasma basse fréquence en fonction des conditions d'élaboration", Eric Bouvier, Université Paul Sabatier de Toulouse, soutenue le 14/09/99, n°d'ordre 3457.

[22] "Trends in Barrier Design", May 1991, Journal Packaging, Japan

[23] US-A-5,538,680 : "Method of molding a polar boss to a composite pressure vessel".

[24] US-A-6,171,423 : "Method for fabricating composite pressure vessels".

[25] US-A-5,577,630 : "Composite conformable pressure vessel".

[26] US-A-6,328,805 : "Equipment for processing using a low-pressure plasma having an improved vacuum circuit".

[27] US-A-5,902,643 : "Mmultilayer packaging material having aminoepoxy gas barrier coating".


## Revendications

**1.** Procédé de fabrication d'un réservoir composite de type IV comprenant dans cet ordre, de l'intérieur du réservoir vers l'extérieur de celui-ci :

- une vessie (2) d'étanchéité au gaz sous pression constituée d'un polymère thermoplastique,
- au moins une embase (4) métallique assurant la connexion intérieur/extérieur du réservoir pour son remplissage et pour l'utilisation du gaz stocké, et
- un renfort mécanique (6) de la vessie ;

et comprenant une étape de positionnement de ladite au moins une, embase (4) métallique du réservoir dans un moule destiné à mouler la vessie d'étanchéité du réservoir par rotomoulage ; **caractérisé en ce que** ledit procédé comprend les étapes suivantes :

(a) préparation d'un mélange de polymérisation comprenant le monomère précurseur du polymère thermoplastique, un catalyseur de polymérisation et un activateur de la polymérisation ;
b) polymérisation dudit mélange en ledit polymère thermoplastique dans ledit moule mis en rotation à une température de travail supérieure ou égale à la température de fusion dudit monomère et inférieure à la température de fusion dudit polymère de manière à former ladite vessie par polymérisation dudit monomère couplée à un rotomoulage et sans fusion du polymère thermoplastique obtenu ;
(b1) éventuellement répétition des étapes (a) de préparation d'un mélange de polymérisation et (b) de polymérisation du mélange dans le moule, de façon à obtenir une vessie à plusieurs couches de polymère thermoplastique ;
(c) démoulage de la vessie de polymère thermoplastique obtenue munie de ladite, au moins une, embase ; et
(d) mise en place du renfort mécanique externe de la vessie qui assure la tenue mécanique du réservoir.

**2.** Procédé selon la revendication 1, dans lequel, dans l'étape (a), le mélange de polymérisation est en outre préchauffé de manière à faire fondre le monomère, à une température de préchauffage supérieure ou égale à la température de fusion dudit monomère et inférieure à la température de fusion dudit polymère.

**3.** Procédé selon la revendication 1, dans lequel le moule est purgé par un gaz inerte sec pour la mise en oeuvre de l'étape (b) de polymérisation.

**4.** Procédé selon la revendication 1, dans lequel le moule est mis en rotation suivant deux axes, de manière à ce que la polymérisation se fasse sur toute la surface interne du moule et conformément à celle-ci et sur l'embase métallique positionnée dans le moule.

**5.** Procédé selon la revendication 1, dans lequel l'activateur est un premier s-caprolactame substitué.

**6.** Procédé selon la revendication 1 ou 5, dans lequel le catalyseur est un deuxième ε-caprolactame substitué.

**7.** Procédé selon la revendication 1, dans lequel le mélange de polymérisation comprend en outre un agent de nucléation et/ou des charges et/ou des nanocharges.

**8.** Procédé selon la revendication 1, dans lequel le polymère thermoplastique est un polycaprolactame et le monomère son précurseur, la polymérisation du monomère étant une polymérisation anionique.

**9.** Procédé selon la revendication 1, dans lequel le polymère thermoplastique est un polycaprolactame et le monomère est un caprolactame ou un ε-caprolactame ou un mélange de ceux-ci, la polymérisation du monomère étant une polymérisation anionique.

**10.** Procédé selon la revendication 9, dans lequel le polymère thermoplastique est un polycaprolactame, et dans lequel l'étape consistant à polymériser le monomère précurseur du polycaprolactame en ledit polycaprolactame dans le moule en rotation est réalisée à une température de travail comprise entre 100 à 180°C.

**11.** Procédé selon la revendication 1, dans lequel la mise en place du renfort mécanique est réalisée au moyen d'un enroulement filamentaire autour de la vessie qui sert de mandrin à cet enroulement, ledit enroulement filamentaire étant constitué de fibres de carbone et de résine thermodurcissable.

**12.** Procédé selon la revendication 1, dans lequel ladite vessie d'étanchéité est une vessie de polyamide, ladite, au moins une, embase métallique est une embase en aluminium, et ledit renfort mécanique externe est un enroulement filamentaire constitué de fibres de carbone et de résine thermodurcissable.

**13.** Réservoir composite de type IV de stockage d'un gaz à une pression de service comprise entre $2x10^7$ et $7x10^7$ Pa, susceptible d'être obtenu par le procédé selon l'une quelconque des revendications 1 à 12.

**14.** Réservoir selon la revendication 13, dans lequel la vessie a une épaisseur comprise entre 1 et 20 mm.

**15.** Réservoir selon la revendication 13 ou 14, **caractérisé en ce que** la vessie présente plusieurs couches de polymères thermoplastiques, identiques ou différentes, en épaisseur ou en composition.

**16.** Utilisation d'un réservoir selon l'une quelconque des revendications 13 à 15 pour stocker un gaz sous pression

choisi parmi de l'hydrogène gazeux, du gaz naturel et de l'hélium.

## Claims

1. Process for the manufacture of a type IV composite tank comprising, in this order, from the inside of the tank outwards:

   - a bladder (2) for leaktightness to the pressurized gas composed of a thermoplastic polymer,
   - at least one metal socket (4) which provides the interior/exterior connection of the tank for the filling thereof and for the use of the stored gas, and
   - a member (6) for mechanically reinforcing the bladder;

   and comprising a step of positioning of said at least one metal socket (4) of the tank in a mold intended to mold the leaktight bladder of the tank by rotomolding; wherein
   said process comprises the following steps:

   (a) preparation of a polymerization mixture comprising the precursor monomer of the thermoplastic polymer, a polymerization catalyst and a polymerization activator;
   (b) polymerization of said mixture to give said thermoplastic polymer in said mold set rotating at a working temperature greater than or equal to the melting point of said monomer and lower than the melting point of said polymer, so as to form said bladder by polymerization of said monomer coupled to rotomolding and without melting of the thermoplastic polymer obtained;
   (b1) optional repetition of steps (a) of preparation of a polymerization mixture and (b) of polymerization of the mixture in the mold, so as to obtain a bladder comprising several layers of thermoplastic polymer;
   (c) removal from the mold of the thermoplastic polymer bladder obtained provided with said at least one socket; and
   (d) deploying the external member for mechanically reinforcing the bladder which provides the tank with mechanical strength.

2. Process according to claim 1, in which, in step (a), the polymerization mixture is furthermore preheated, so as to melt the monomer, to a preheating temperature greater than or equal to the melting point of said monomer and lower than the melting point of said polymer.

3. Process according to claim 1, in which the mold is purged by a dry inert gas for the implementation of the polymerization step (b).

4. Process according to claim 1, in which the mold is set rotating along two axes, so that the polymerization takes place over the entire internal surface of the mold and conform to the internal surface and over the metal socket positioned in the mold.

5. Process according to claim 1, in which the activator is a first substituted ε-caprolactam.

6. Process according to claim 1 or 5, in which the catalyst is a second substituted ε-caprolactam.

7. Process according to claim 1, in which the polymerization mixture furthermore comprises a nucleating agent and/or fillers and/or nanofillers.

8. Process according to claim 1, in which the thermoplastic polymer is a polycaprolactam and the monomer its precursor, the polymerization of the monomer being an anionic polymerization.

9. Process according to claim 1, in which the thermoplastic polymer is a polycaprolactam and the monomer is a caprolactam or an ε-caprolactam or a mixture thereof, the polymerization of the monomer being an anionic polymerization.

10. Process according to claim 9, in which the thermoplastic polymer is a polycaprolactam and in which the step consisting in polymerizing the precursor monomer of the polycaprolactam to give said polycaprolactam in the rotating mold is carried out at a working temperature of 100 to 180°C.

**11.** Process according to claim 1, in which the deploying of the member for mechanically reinforcing is carried out by means of a filament winding around the bladder, which acts as winding tube for this winding, said filament winding being composed of carbon fibers and of thermosetting resin.

**12.** Process according to claim 1, in which said leaktight bladder is a polyamide bladder, said at least one metal socket is an aluminum socket and said external member for mechanically reinforcing is a filament winding composed of carbon fibers and of thermosetting resin.

**13.** Type IV composite tank for the storage of a gas at a working pressure of between $2 \times 10^7$ and $8 \times 10^7$ Pa, capable of being obtained by the process according to any one of claims 1 to 12.

**14.** Tank according to claim 13, in which the bladder has a thickness comprised between 1 and 20 mm.

**15.** Tank according to claim 13 or 14, in which the bladder presents several layers of thermoplastic polymers, identical or different, in thickness or in composition.

**16.** Use of a tank according to any one of claims 13 to 15, for storing a pressurized gas chosen from hydrogen gas, natural gas and helium.

**Patentansprüche**

**1.** Verfahren zur Herstellung eines Typ-IV-Verbundbehälters, der in dieser Reihenfolge von der Innenseite des Behälters nach außen Folgendes umfasst:

- eine sich aus einem thermoplastischen Polymer zusammensetzende, gegenüber unter Druck stehendem Gas leckdichte Blase (2),
- wenigstens einen Ansatz (4) aus Metall, der den Innen-/Außenanschluss des Behälters zu dessen Füllen und zum Gebrauch des gespeicherten Gases bereitstellt, und
- eine mechanische Verstärkung (6) der Blase;

umfassend einen Schritt des Anbringens des wenigstens einen Ansatzes (4) aus Metall des Behälters in einer Form, in der die leckdichte Blase des Behälters durch Rotationsformen gebildet werden soll, **dadurch gekennzeichnet, dass** das Verfahren die folgenden Schritte umfasst:

(a) Herstellung eines Polymerisationsgemischs, das die monomere Vorstufe des thermoplastischen Polymers, einen Polymerisationskatalysator und einen Polymerisationsaktivator umfasst,
(b) Polymerisation dieses Gemischs zu dem thermoplastischen Polymer in der sich drehenden Form bei einer Arbeitstemperatur über oder gleich der Schmelztemperatur des Monomers und unter der Schmelztemperatur des Polymers, um so durch mit einem Rotationsformen gekoppelte Polymerisation des Monomers und ohne Schmelzen des erhaltenen thermoplastischen Polymers die Blase zu bilden,
(b1) gegebenenfalls Wiederholung der Schritte (a) der Herstellung eines Polymerisationsgemischs und (b) der Polymerisation des Gemischs in der Form, um eine Blase mit mehreren Schichten aus thermoplastischem Polymer zu erhalten,
(c) Ausformen der erhaltenen, mit dem mindestens einen Ansatz versehenen Blase aus thermoplastischem Polymer, und
(d) Anbringen der äußeren mechanischen Verstärkung der Blase, die die mechanische Festigkeit des Behälters sicherstellt.

**2.** Verfahren gemäß Anspruch 1, wobei in Schritt (a) das Polymerisationsgemisch außerdem zum Schmelzen des Monomers auf eine Vorerhitzungstemperatur über oder gleich der Schmelztemperatur des Monomers und unter der Schmelztemperatur des Polymers vorerhitzt wird.

**3.** Verfahren gemäß Anspruch 1, wobei die Form zum Einsatz in Schritt (b) der Polymerisation mit einem trockenen Inertgas gespült wird.

**4.** Verfahren gemäß Anspruch 1, wobei die Form in zwei Achsen in Rotation versetzt wird, damit die Polymerisation auf der gesamten Innenfläche der Form und zu dieser konform und auf dem in der Form angebrachten Ansatz aus

Metall stattfindet.

5. Verfahren gemäß Anspruch 1, wobei der Aktivator ein erstes substituiertes ε-Caprolactam ist.

6. Verfahren gemäß Anspruch 1 oder 5, wobei der Katalysator ein zweites substituiertes ε-Caprolactam ist.

7. Verfahren gemäß Anspruch 1, wobei das Polymerisationsgemisch außerdem einen Keimbildner und/oder Füllstoffe und/oder Nanofüllstoffe umfasst.

8. Verfahren gemäß Anspruch 1, wobei das thermoplastische Polymer ein Polycaprolactam und das Monomer seine Vorstufe ist, wobei die Polymerisation des Monomers eine anionische Polymerisation ist.

9. Verfahren gemäß Anspruch 1, wobei das thermoplastische Polymer ein Polycaprolactam ist und das Monomer ein Caprolactam oder ein ε-Caprolactam oder ein Gemisch davon ist, wobei die Polymerisation des Monomers eine anionische Polymerisation ist.

10. Verfahren gemäß Anspruch 9, wobei das thermoplastische Polymer ein Polycaprolactam ist und wobei der aus dem Polymerisieren der monomeren Vorstufe des Polycaprolactams zu dem Polycaprolactam in der Rotationsform bestehende Schritt bei einer Arbeitstemperatur zwischen 100 bis 180 °C durchgeführt wird.

11. Verfahren gemäß Anspruch 1, wobei das Anbringen der mechanischen Verstärkung mittels einer Drahtumwicklung um die Blase erfolgt, die als Hülse für diese Umwicklung dient, wobei sich die Drahtumwicklung aus Kohlenstofffasern und wärmehärtbarem Harz zusammensetzt.

12. Verfahren gemäß Anspruch 1, wobei die leckdichte Blase eine Polyamidblase ist, der wenigstens eine Ansatz aus Metall ein Ansatz aus Aluminium ist und die äußere mechanische Verstärkung eine Drahtumwicklung ist, die sich aus Kohlenstofffasern und wärmehärtbarem Harz zusammensetzt.

13. Typ-IV-Verbundbehälter zur Gasspeicherung bei einem Arbeitsdruck zwischen $2x10^7$ und $7x10^7$ Pa, erhältlich durch das Verfahren gemäß einem der Ansprüche 1 bis 12.

14. Behälter gemäß Anspruch 13, bei dem die Blase eine Dicke zwischen 1 und 20 mm aufweist.

15. Behälter gemäß Anspruch 13 oder 14, **dadurch gekennzeichnet, dass** die Blase mehrere Schichten aus in der Dicke oder Zusammensetzung gleichen oder verschiedenen thermoplastischen Polymeren aufweist.

16. Verwendung eines Behälters gemäß einem der Ansprüche 13 bis 15 zum Speichern eines aus gasförmigem Wasserstoff, Erdgas und Helium ausgewählten Gases unter Druck.

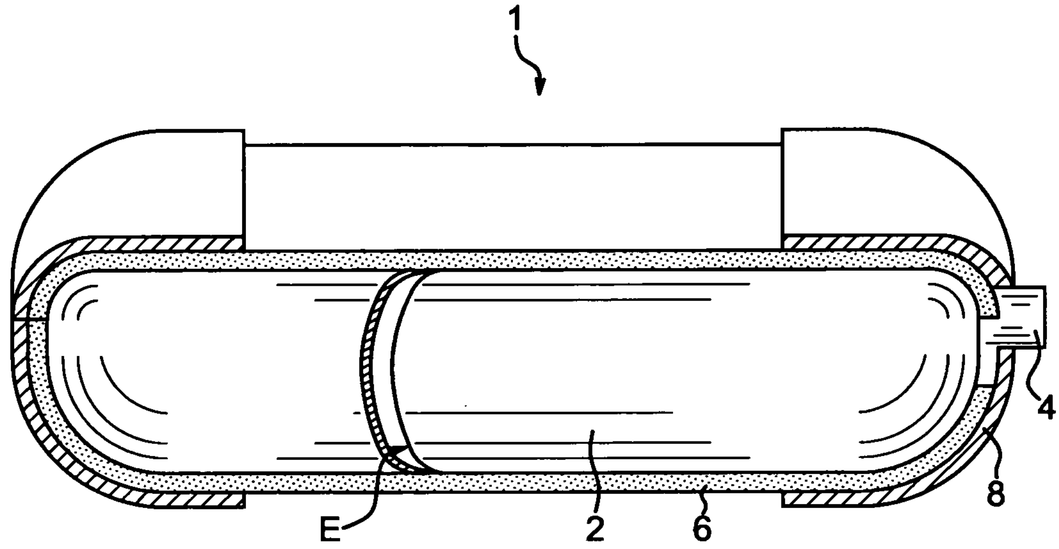


FIG. 1

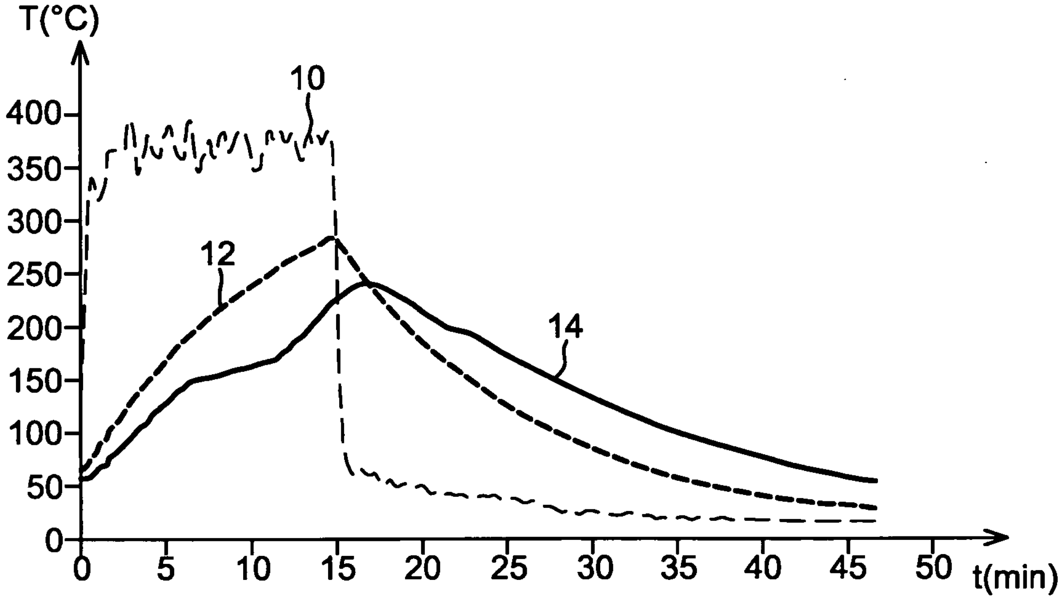
T(°C)
400
350
300
250
200
150
100
50
0
0
5
10
15
20
25
30
35
40
45
50
t(min)
10
12
14

FIG. 2

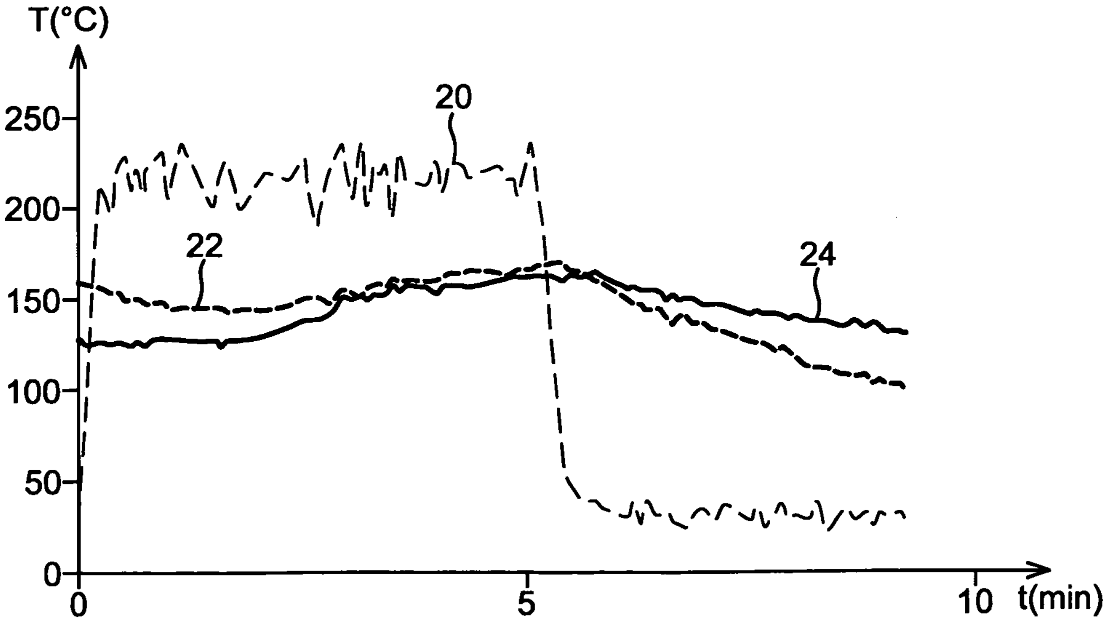
T(°C)
250
200
150
100
50
0
0
5
10
t(min)
20
22
24

FIG. 3

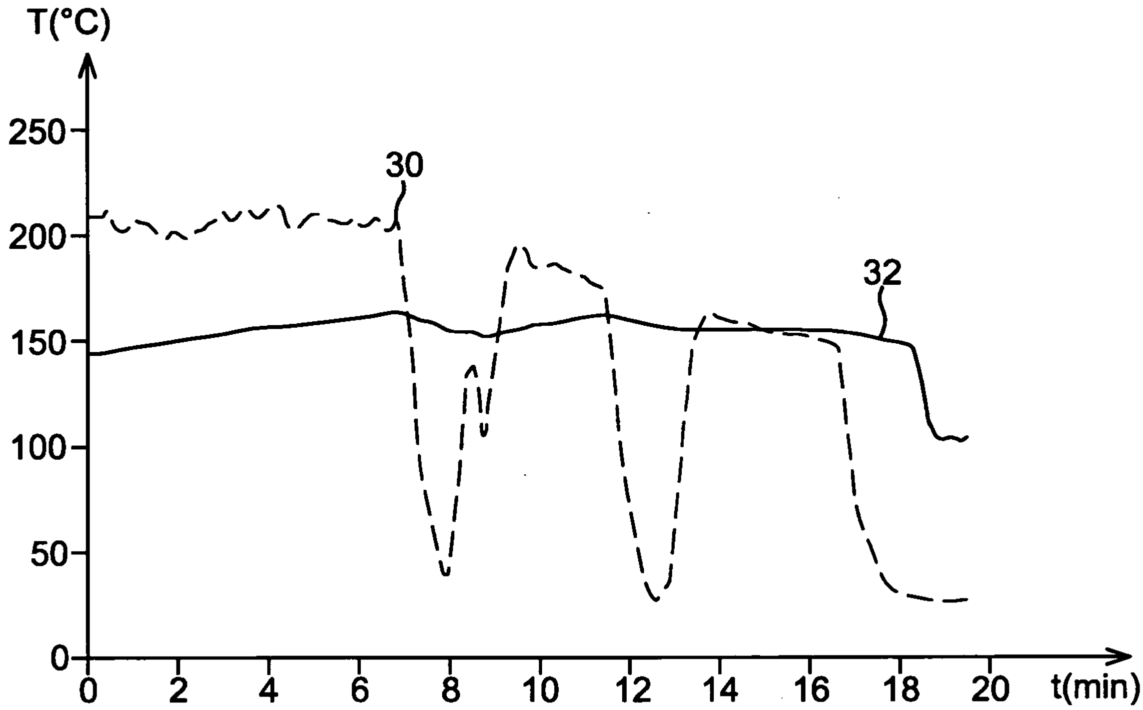


FIG. 4

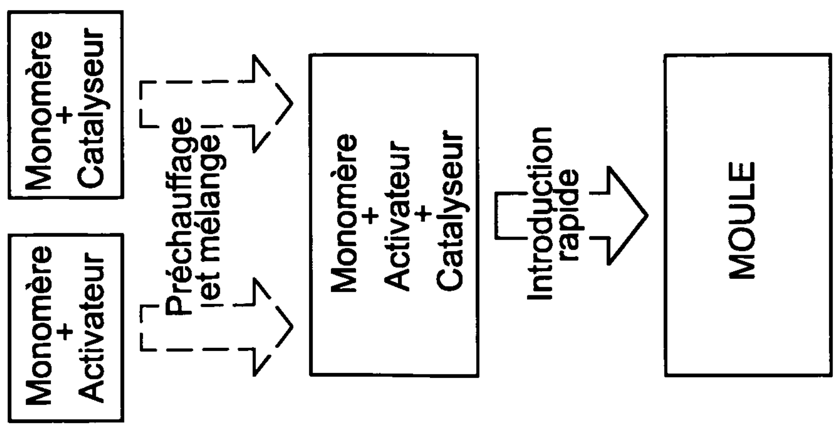


FIG. 5A

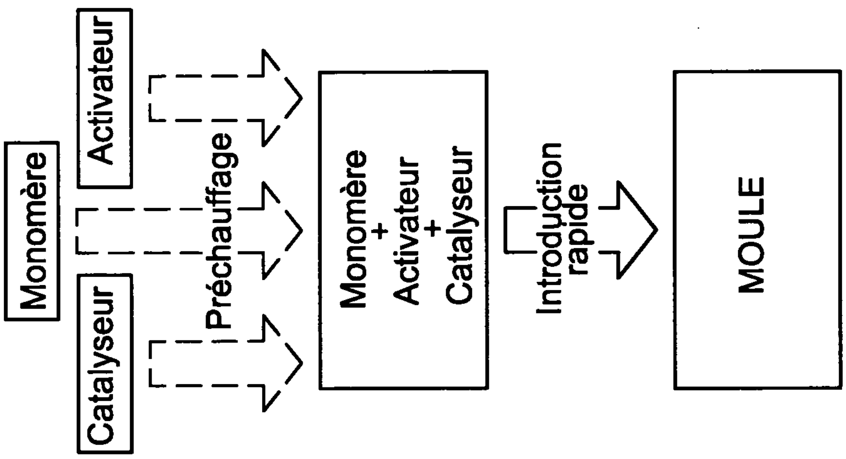


FIG. 5B

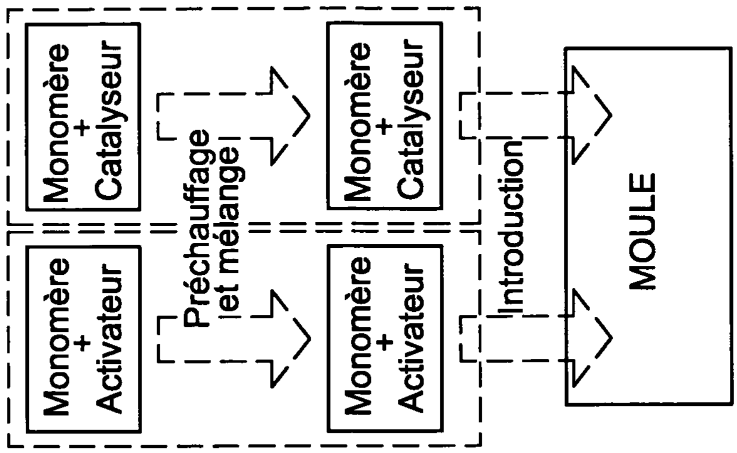


FIG. 5C

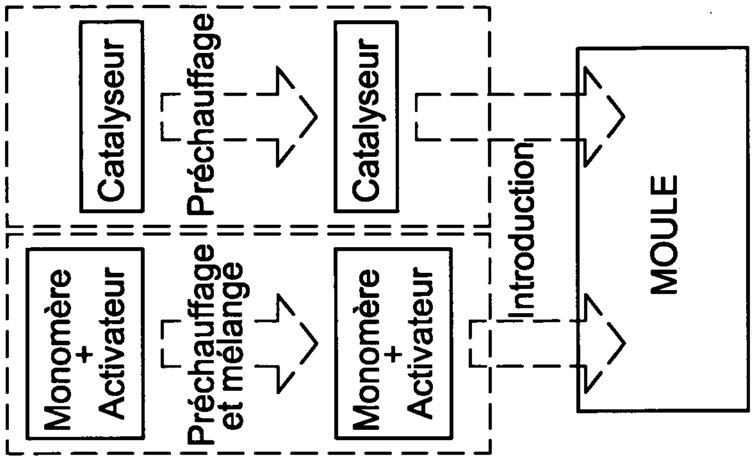
Monomère + Activateur
Préchauffage et mélange
Monomère + Activateur
Catalyseur
Préchauffage
Catalyseur
Introduction
MOULE

FIG. 5E

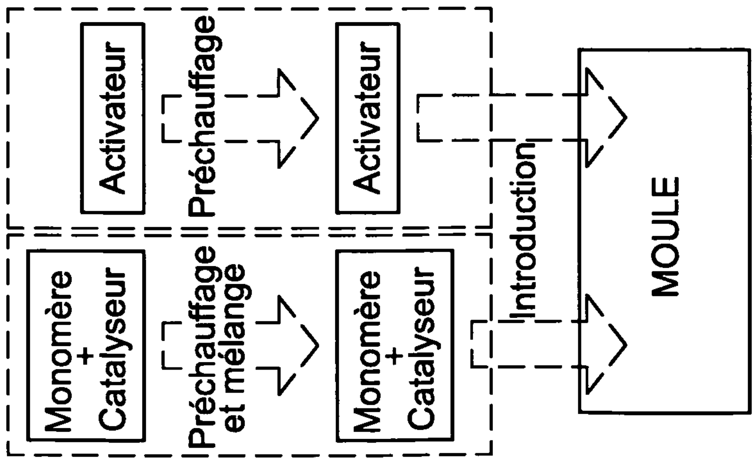
Monomère + Catalyseur
Préchauffage et mélange
Monomère + Catalyseur
Activateur
Préchauffage
Activateur
Introduction
MOULE

FIG. 5D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4705468 A
- US 6298553 B
- JP 7167392 A
- US 3417097 A
- FR 2125347
- FR 2813232 A
- FR 2813235 A
- US 4927038 A
- US 4925044 A
- US 5499739 A
- US 6554939 A
- US 5568878 A
- US 6660214 A
- US 3275733 A
- US 5538680 A
- US 6171423 A
- US 5577630 A
- US 6328805 A
- US 5902643 A


### Littérature non-brevet citée dans la description


- Next Generation Hydrogen Tankage. Proceedings of the 2001 U.S. DOE Hydrogen Program Review. Laurence Livermore National Laboratory, 2001
- Hydrogen Composite Tank Program. Proceedings of the 2002 U.S. DOE Hydrogen Program Review. Quantum Technologies, 2002
- Hydrogen Composite Tank Project. FY 2003, Progress Report. Quantum Fuel System Technologies, 2003
- Development of a Compressed Hydrogen Gas Integrated Storage System (CH2-ISS) for Fuel Cell Vehicles. FY 2003 Progress Report. University Applied Physics Laboratory, 2003
- Next Generation Hydrogen Storage. FY 2003 Progress Report. Laurence Livermore National Laboratory, 2003
- Low Permeation Liner for Hydrogen Gas Storage Tanks. FY 2003 Progress Report. Idaho National Engineering & Environmental Laboratory, 2003
- **Henry L. HSIEH ; Roderick P. QUIRCK.** Anionic Polymerization, Principles and Practical Applications. Marcel Deker, Inc, 1996
- Oil & Gas Science and Tecnology. Revue de l'Institut Français du Pétrole, Numéro spécial 2001. Mai 2001, vol. 56, 215-312
- **Patrick Muller ; Claire Ossadzow.** Introduction des Coques Minces. Hermes Science Publications, 1999
- **Kurt Gleck.** Formulaire Technique. Dunod, 1997
- **Eric Bouvier.** Etude de la nature de couches barrières à l'oxygène réalisées par plasma basse fréquence en fonction des conditions d'élaboration. Université Paul Sabatier de Toulouse, 14 Septembre 1999
- Trends in Barrier Design. *Journal Packaging, Japan,* Mai 1991